# FASCICULE DE BREVET EUROPEEN

(11) **EP 3 284 333 B1**
(45) Date de publication et mention de la délivrance du brevet: **01.05.2019**
(21) Numéro de dépôt: 17170552.8
(22) Date de dépôt: 11.05.2017
(51) Int. Cl.: A01D 34/535

(54) **DISPOSITIF DE MONTAGE/DEMONTAGE D'AU MOINS UN MARTEAU SUR UN ROTOR DE MACHINE AGRICOLE, ET OUTIL EQUIPE D'UN TEL DISPOSITIF**
VORRICHTUNG ZUM MONTIEREN/DEMONTIEREN VON MINDESTENS EINEM HAMMER AUF EINEM ROTOR EINER LANDWIRTSCHAFTLICHEN MASCHINE, UND MIT EINER SOLCHEN VORRICHTUNG AUSGESTATTETES WERKZEUG
DEVICE FOR INSTALLING/REMOVING AT LEAST ONE HAMMER ON THE ROTOR OF A FARM MACHINE, AND TOOL EQUIPPED WITH SUCH A DEVICE

(30) Priorité: 17.08.2016 FR 1657055
(43) Date de publication de la demande: 21.02.2018
(73) Titulaire: Forges Gorce, 63920 Peschadoires (FR)
(72) Inventeur: THIL, Jean-Pierre, 69380 Chessy-lès-Mines (FR); VIDAL, Gilles, 63670 Orcet (FR)
(74) Mandataire: Cabinet Netter

(56) Documents cités:
- EP-A1- 0 728 408
- EP-A1- 1 847 322
- FR-A1- 2 804 577

## Description

La présente invention se rapporte à un dispositif de montage/démontage d'au moins un marteau de tonte/broyage de végétaux sur un rotor d'une machine agricole, en particulier une faucheuse ou une débroussailleuse, à un outil équipé d'un tel dispositif et à une machine agricole équipée d'un tel outil.

Les machines de type agricole utilisées pour faucher ou débroussailler les abords des routes, notamment les talus d'autoroutes, comprennent de manière générale un rotor horizontal tournant sur un axe perpendiculaire à la direction d'avance de ladite débroussailleuse, et des marteaux, répartis de préférence sur la longueur et la circonférence du rotor. Les marteaux sont montés libres en rotation sur des supports solidaires du rotor appelés manille, et se dressent vers l'extérieur à partir du rotor sous l'effet de la force centrifuge lorsque le rotor tourne afin de broyer ou couper la végétation (selon la position du marteau et la partie de ce dernier qui entre en contact avec ladite végétation lors de la rotation du rotor).

Un démontage intempestif des marteaux, même lorsque la faucheuse vient heurter des objets durs tels que des pierres ou autres, est évidemment empêché pendant le fonctionnement de la machine.

Du fait que le tranchant des marteaux peut s'émousser ou s'ébrécher après un usage prolongé, ou après avoir heurté un obstacle dur tel qu'un rocher, il est nécessaire de pouvoir retirer lesdits marteaux pour les remplacer.

A cet effet, les marteaux sont chacun montés de manière amovible sur le rotor à l'aide d'une manille. Les marteaux et la manille peuvent ainsi pivoter selon des axes parallèles à l'axe de rotation du rotor, comme cela est décrit dans les documents de brevet US-A-3 527 038.

Le plus souvent, la manille présente une forme en « U » dont les branches sont situées entre les deux pattes d'un support solidaire du rotor de sorte que le marteau est suspendu dans la zone arrondie de la manille, tandis qu'une entretoise est insérée entre les branches de la manille et traversée par une tige filetée de retenue.

EP 1847322 de la demanderesse présente un dispositif de montage/démontage d'un couteau sur le rotor d'une machine agricole.

Cependant, ce type de montage ne donne pas entièrement satisfaction. En effet, ce montage est relativement long à réaliser. Sachant qu'un rotor de débroussailleuse peut compter plusieurs dizaines de marteaux de ce type, la perte de temps lors des opérations de montage/démontage devient rapidement importante et coûteuse. De plus, ce système nécessite souvent un outillage approprié qui n'est pas toujours disponible lorsqu'il s'agit de démonter un marteau endommagé en zone de travail.

Par ailleurs, l'utilisation d'une entretoise ajoute au système une pièce qui peut facilement se perdre. Cette entretoise peut également gêner la rotation des marteaux si elle est mal positionnée ou si ses dimensions sont mal adaptées à la manille et à la tige filetée de retenue, ou bien provoquer des vibrations pouvant être gênantes d'un point de vue acoustique ou fragiliser les branches de la manille.

Un but de la présente invention est donc de résoudre les problèmes cités précédemment à l'aide d'une solution simple à mettre en oeuvre et moins onéreuse que celles de l'art antérieur pour permettre un montage/démontage rapide des marteaux, sans utilisation d'outillage.

Pour cela, l'invention propose de modifier la conception de la manille et des marteaux, notamment grâce à la coopération d'une fente latérale ménagée dans la manille et d'une zone d'épaisseur affinée ménagée dans le marteau.

Plus précisément, la présente invention a pour objet un dispositif de montage/démontage d'un marteau de broyage sur un rotor de machine agricole, en particulier de faucheuse et/ou de débroussailleuse, comprenant :
- une manille destinée à être fixée de manière pivotante sur un support du rotor, la manille comportant deux branches opposées qui sont reliées par une portion courbe et dont l'une d'elles comporte une interruption de matière délimitant une fente latérale ayant une largeur déterminée et située dans une zone éloignée de la portion courbe reliant les deux branches de la manille, et
- un marteau monté libre sur la portion courbe de la manille, le marteau formant un ensemble monobloc sans discontinuité de matière et comportant un anneau de suspension présentant localement au moins un amincissement de matière dont l'épaisseur, à son endroit le plus fin, est sensiblement inférieure à la largeur de ladite fente, et une lame proéminente en forme de coin s'étendant perpendiculairement à l'axe de l'anneau et dont le tranchant est sensiblement parallèle audit axe.

Selon la présente invention :
- l'amincissement de matière de l'anneau du marteau est situé sensiblement à l'opposé du tranchant de la lame ;
- l'amincissement de matière de l'anneau du marteau est réalisé sur deux côtés opposés de la section dudit anneau et présente une forme de double « V » opposés ;

Selon des modes de réalisation préférés de la présente invention :
- chaque amincissement de matière en forme de V est pourvu en outre d'une réduction supplémentaire de matière de type chanfrein située au niveau ou proche de l'intérieur de l'anneau ;
- les deux branches de la manille sont réalisées d'un seul tenant avec un manchon situé en face de la portion courbe et comprenant un orifice cylindrique axial, le manchon étant prévu pour recevoir des moyens de fixation de la manille sur le support du rotor ;
- le manchon comprend une ouverture débouchant sur des faces frontale et dorsale de la manille et communiquant avec les extrémités de l'orifice cylindrique axial ;
- la fente de la manille est délimitée par deux entailles en forme de « V » dont les sommets respectifs font saillie l'un en face de l'autre et définissent la largeur de la fente ;
- un ergot de retenue fait saillie à l'intérieur de la manille, à proximité de la fente ;
- le marteau est monté sur la manille de sorte que son tranchant soit orienté vers l'avant selon le sens de déplacement et de rotation du rotor afin que le marteau coupe la végétation ; ou
- le marteau est monté sur la manille de sorte que son tranchant soit orienté vers l'arrière selon le sens de déplacement et de rotation du rotor afin que le marteau broie la végétation.

La présente invention se rapporte également à un outil pour machine agricole, en particulier pour faucheuse ou débroussailleuse, comprenant un rotor muni de supports sur chacun desquels est fixé un dispositif de montage/démontage de marteau tel que défini précédemment.

La présente invention concerne en outre une machine agricole, notamment une faucheuse ou une débroussailleuse, équipée d'un tel outil.

L'invention va maintenant être décrite plus en détail en référence à des modes de réalisation particuliers donnés à titre d'illustration uniquement et représentés sur les figures annexées dans lesquelles :
- La figure 1 est une vue en perspective d'un rotor de machine agricole muni de plusieurs marteaux de tonte/broyage,
- La figure 2 est une vue en perspective éclatée d'un marteau, d'une manille et d'un support,
- La figure 3 est une vue en perspective de la manille,
- La figure 4 est une vue de face de la manille,
- La figure 5 est une vue de côté de la manille,
- La figure 6 est une vue en perspective du marteau de la figure 2,
- La figure 7 est une vue de côté du marteau de la figure 6,
- La figure 8 est une vue de face du marteau de la figure 6
- La figure 9 est une vue de détail en coupe selon la ligne AA de la figure 7, et
- La figure 10 est une vue en perspective du marteau monté sur la manille.

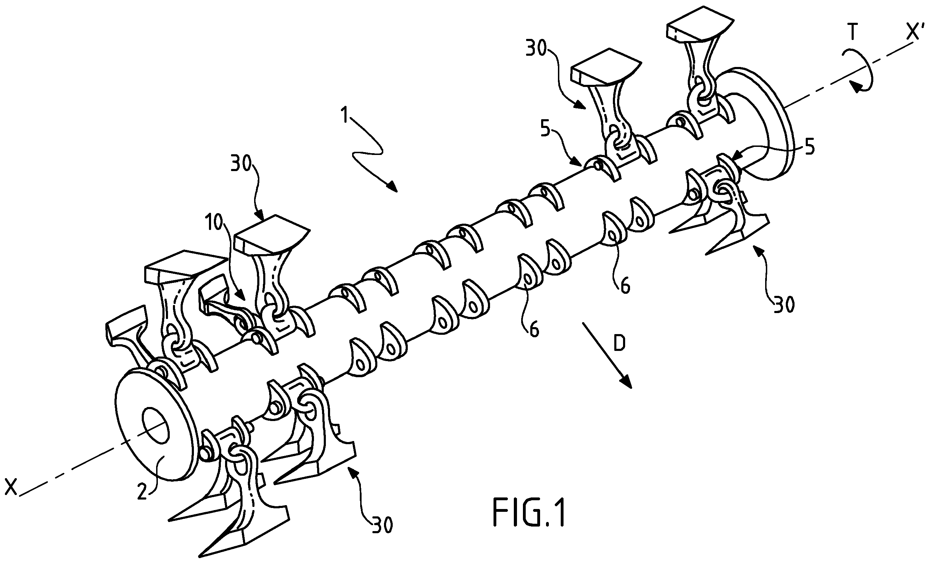

La figure 1 représente outil 1 adapté pour être monté sur une machine agricole telle qu'une faucheuse ou une débroussailleuse, par exemple pour talus d'autoroute. Cet outil 1 comprend un rotor 2 de type connu monté rotatif sur un axe XX' perpendiculaire à la direction d'avance de la machine agricole

Plusieurs supports 5 sont solidaires du rotor 2, par exemple par soudage. Ces supports 5 sont répartis sur la longueur et la circonférence du rotor 2 pour couvrir une surface de broyage la plus étendue possible. Chaque support 5 est essentiellement constitué par deux pattes 6 se faisant face et percées chacune d'un orifice traversant 7. L'outil 1 comprend en outre plusieurs dispositifs 10 de montage/démontage de marteau montés sur les supports 5 et décrits plus en détail ci-après.

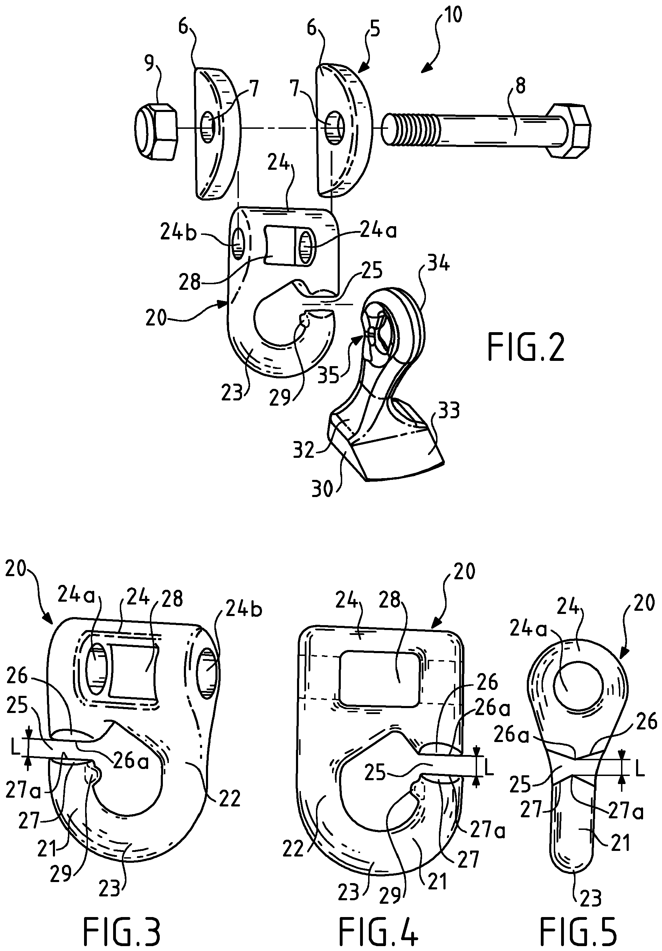

Conformément à la figure 2, chaque dispositif de montage/démontage 10 comporte une manille droite 20 destinée à être montée de manière pivotante entre les pattes 6 du support 5 correspondant. Le dispositif de montage/démontage 10 comprend également au moins un marteau 30 monté libre sur la manille 20.

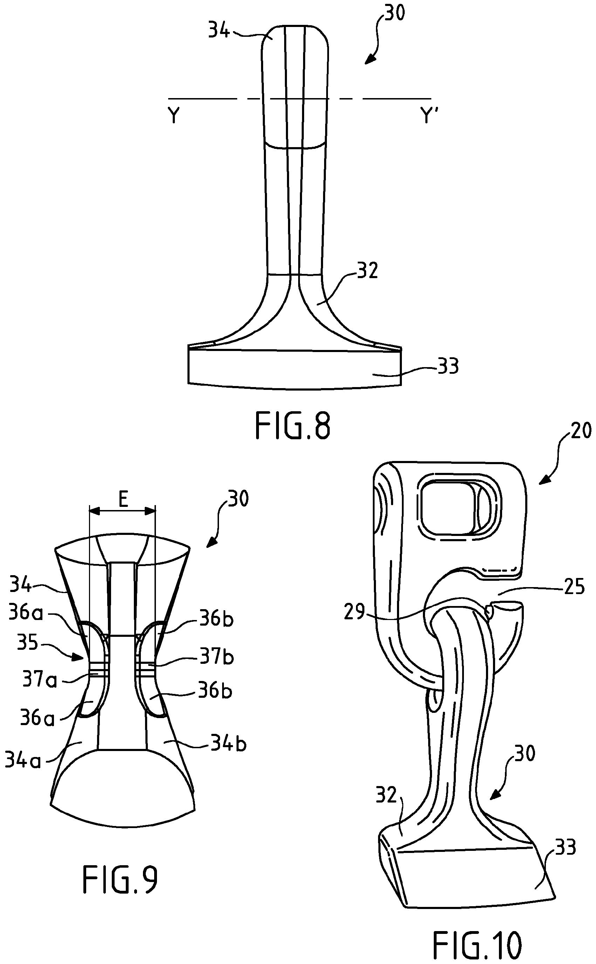

La manille 20, visible plus en détail également sur les figures 3 à 5, comprend deux branches parallèles 21 et 22 situées l'une en face de l'autre et se rejoignant en une portion courbe 23 à laquelle est suspendu le marteau 30 de manière libre (figure 10). A l'opposé de cette portion courbe 23, se trouve une partie réalisée d'un seul tenant avec les branches 21 et 22, formant un manchon 24 sensiblement rectiligne destiné notamment à rigidifier lesdites branches à la manière d'une entretoise. On comprend par l'expression « d'un seul tenant » que le manchon 24 et les branches 21 et 22 sont réalisés d'une seule pièce venue de matière.

Le manchon 24 est traversé par un orifice cylindrique axial comportant deux extrémités latérales 24a et 24b. Le manchon 24 est adapté pour recevoir une tige filetée de retenue 8 le traversant (figure 2) . Le manchon 24 présente une large ouverture transversale 28 s'étendant perpendiculairement à l'orifice axial, de manière à alléger son poids sans réduire notablement sa résistance aux contraintes. L'ouverture 28 débouche sur les faces frontale et dorsale de la manille 20 et communique avec des extrémités 24a et 24b de l'orifice cylindrique axial.

La manille 20 est réalisée en métal résistant aux chocs, par exemple en acier estampé à chaud. Elle présente un contour fermé à l'exception d'une fente latérale 25 réalisée dans la branche 21, dans une zone éloignée de la portion courbe 23 et proche du manchon 24. La fente 25 est délimitée par deux entailles 26 et 27 réalisées dans la branche 21. Les entailles 26 et 27 présentent chacune une forme de « V » dont les sommets respectifs 26a et 27a font saillie l'un en face de l'autre et définissent la largeur L de la fente 25. Ainsi, la fente 25 forme une interruption locale de matière dans la manille 20 pour permettre le montage/démontage du marteau 30, comme cela sera décrit ultérieurement.

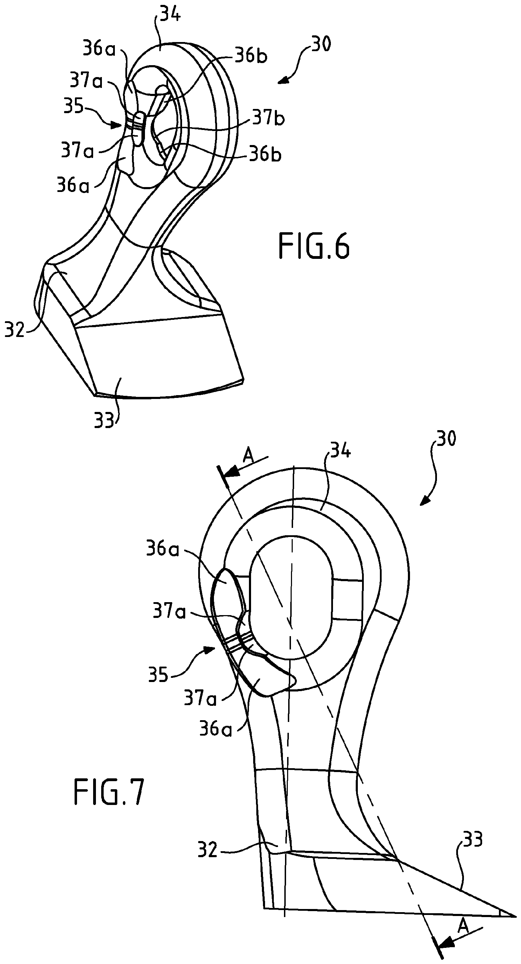

Tel qu'illustré sur les figures 6 à 9, le marteaux 30 comporte un anneau de suspension totalement fermé 34 perpendiculaire à un axe YY'. L'anneau 34 se prolonge par une tête 32 en forme de coin équipée d'un tranchant incliné 33 sensiblement parallèle à l'axe YY' de l'anneau 34 de manière à former une lame. L'anneau de suspension 34 présente localement un amincissement de matière 35 dont l'épaisseur E est sensiblement inférieure à la largeur L de la fente latérale 25 de la manille 20.

Les figures 7 et 9 montrent plus en détail l'amincissement de matière 35. Ce dernier est situé sensiblement à l'opposé du tranchant 33 de la lame.

Plus précisément, l'amincissement de matière 35 du marteau 30 est réalisé sur deux côtés opposés 34a et 34b de la section de l'anneau 34 et présente la forme de deux « V » opposés. Les portions 36a et 36b en forme de « V » de l'amincissement de matière 35 présentent respectivement une réduction supplémentaire de matière de type chanfrein 37a et 37b située au niveau ou proche de l'intérieur de l'anneau 34.

Un ergot de retenue 29 est également prévu à proximité immédiate de la fente 25 et fait saillie à l'intérieur de la manille 20, comme cela est visible sur les figures 3 et 4. Ainsi, une fois le marteau 30 suspendu à la manille 20 au niveau de la portion courbe 23 (figure 10), il est retenu en position par l'ergot 29 qui empêche son éjection intempestive tout en permettant son montage/démontage par de simples manipulations décrites ci-après.

L'utilisation du dispositif de montage/démontage 10 est la suivante. Chaque marteau 30 est suspendu à la manille 20 correspondante en insérant son anneau de suspension respectif 34 dans celle-ci. Pour réaliser cette opération, il convient de placer l'amincissement de matière 35 de l'anneau 34 de chaque marteau 30 en regard de la fente latérale 25 de la manille 20, puis d'insérer le marteau dans la manille 20 par cette fente 25. Ceci est rendu possible en raison du fait que l'épaisseur E de l'amincissement de matière 35 est légèrement inférieure à la largeur L de la fente 25.

Une fois cet ensemble réalisé, il suffit de venir placer la manille 20 entre les pattes 6 du support 5 en positionnant le manchon 24 au regard des orifices 7. Ensuite, une tige filetée 8 munie d'une tête est passée au travers des orifices 7 des pattes 6 et des extrémités 24a et 24b de l'orifice axial du manchon 24. La tige filetée 8 est alors bloquée en translation axiale par un écrou de maintien 9 (figure 2) .

Ainsi, chaque marteau 30 peut pivoter librement par rapport à la manille 20 selon un axe parallèle à l'axe XX' du rotor 2, et osciller également latéralement sur la portion courbe 23 de ladite manille 20.

La manille 20 peut quant à elle pivoter par rapport au support 5 autour de la tige filetée 8 qui définit également un axe de pivotement parallèle à l'axe XX' du rotor 2.

Grâce à la combinaison de la fente latérale 25 et de l'amincissement 35, le montage et le démontage du marteau 30 sur la manille 20 sont extrêmement faciles. Cela n'empêche pas au marteau 30 de rester suspendu à la manille 20 tout au long de son utilisation, par exemple lors d'un fauchage de bas-côté de route, notamment grâce à la présence de l'ergot 29 et en raison du fait que l'épaisseur de l'anneau de suspension 34 du marteau 30 est supérieure à la largeur L de la fente 25, sauf à l'endroit de l'amincissement de matière 35.

Le marteau 30 peut être monté de différentes façons selon l'utilisation voulue.

Dans un premier mode de réalisation, le marteau 30 est monté sur la manille 20 de sorte que son tranchant 33 soit orienté vers l'avant selon le sens de déplacement D et de rotation T du rotor 2 afin que le marteau 30 coupe la végétation.

Dans un deuxième mode de réalisation, le marteau 30 est monté sur la manille 20 de sorte que son tranchant 33 soit orienté vers l'arrière selon le sens de déplacement D et de rotation T du rotor 2 afin que le marteau 30 broie la végétation.

Il doit être bien entendu que la description détaillée de l'objet de l'Invention, donnée uniquement à titre d'illustration, ne constitue en aucune manière une limitation, les équivalents techniques étant également compris dans le champ de la présente invention tel que défini par les revendications annexées. La forme en V des entailles 26 et 27 de la fente 25 peut être différente dès lors que la largeur L de la fente reste supérieure à l'épaisseur E de l'amincissement de matière 35 du marteau 30.

La fente 25 peut être réalisée dans la branche 22 de la manille 20 à la place de la branche 21.

La machine agricole peut également être une épareuse.

## Revendications

1. Dispositif (10) de montage/démontage d'un marteau de broyage (30) sur un rotor (2) de machine agricole, en particulier de faucheuse et/ou de débroussailleuse, comprenant :
- une manille (20) destinée à être fixée de manière pivotante sur un support (5) du rotor (2), la manille (20) comportant deux branches opposées (21, 2) qui sont reliées par une portion courbe (23) et dont l'une d'elles comporte une interruption de matière délimitant une fente latérale (25) présentant une largeur déterminée (L) et située dans une zone éloignée de la portion courbe (23) reliant les deux branches de la manille 20, et
- un marteau (30) monté libre sur la portion courbe (23) de la manille (20), le marteau (30) comportant un anneau de suspension (34) présentant localement au moins un amincissement de matière (35) dont l'épaisseur (E), à son endroit le plus fin, est sensiblement inférieure à la largeur (L) de ladite fente (25), **caractérisé en ce que** le marteau (30) forme un ensemble monobloc sans discontinuité de matière, **en ce qu'**une lame proéminente en forme de coin s'étende perpendiculairement à l'axe de l'anneau et dont le tranchant (33) est sensiblement parallèle audit axe, et **en ce que** l'amincissement de matière (35) de l'anneau (34) du marteau (30) est situé sensiblement à l'opposé du tranchant de la lame (33) et est réalisé sur deux côtés opposés (34a, 34b) de la section dudit anneau (34) en présentant la forme de deux « V » opposés (36a ; 36b).

2. Dispositif selon la revendication 1, **caractérisé en ce que** chaque amincissement de matière (36a ; 36b) en forme de « V » est pourvu en outre d'une réduction supplémentaire de matière de type chanfrein (37a ; 37b) située au niveau ou proche de l'intérieur de l'anneau (34) .

3. Dispositif selon l'une quelconque des revendications précédentes, **caractérisé en ce que** les deux branches (21, 22) de la manille (20) sont réalisées d'un seul tenant avec un manchon (24) situé en face de la portion courbe (23) et comprenant un orifice cylindrique axial, le manchon (24) étant prévu pour recevoir des moyens de fixation (8, 9) de la manille (20) sur le support (5) du rotor (2).

4. Dispositif selon la revendication 3, **caractérisé en ce que** le manchon (24) comprend une ouverture (28) débouchant sur des faces frontale et dorsale de la manille (20) et communiquant avec les extrémités (24a, 24b) de l'orifice cylindrique axial.

5. Dispositif selon l'une quelconque des revendications précédentes, **caractérisé en ce que** la fente (25) de la manille est délimitée par deux entailles (26, 27) en forme de « V » dont les sommets respectifs font saillie l'un en face de l'autre et définissent la largeur (L) de la fente (25).

6. Dispositif selon l'une quelconque des revendications précédentes, **caractérisé en ce qu'**un ergot (29) de retenue fait saillie à l'intérieur de la manille (20), à proximité de la fente (25) .

7. Dispositif selon l'une quelconque des revendications précédentes, **caractérisé en ce que** le marteau (30) est monté sur la manille (20) de sorte que son tranchant (33) soit orienté vers l'avant selon le sens de déplacement (D) et de rotation (T) du rotor (2) afin que le marteau (30) coupe la végétation.

8. Dispositif selon l'une quelconque des revendications 1 à 6, **caractérisé en ce que** le marteau (30) est monté sur la manille (20) de sorte que son tranchant (33) soit orienté vers l'arrière selon le sens de déplacement (D) et de rotation (T) du rotor (2) afin que le marteau broie la végétation.

9. Outil pour machine agricole, en particulier pour faucheuse ou débroussailleuse, comprenant un rotor (2) muni de supports (5) sur chacun desquels est fixé un dispositif (10) de montage/démontage de marteau selon l'une quelconque des revendications précédentes.

10. Machine agricole, notamment faucheuse ou débroussailleuse, équipée d'un outil selon la revendication 9.

## Patentansprüche

1. Vorrichtung (10) zum Montieren/Demontieren eines Mahlhammers (30) auf einem Rotor (2) einer landwirtschaftlichen Maschine, insbesondere eines Mähers und/oder Freischneiders, umfassend:
- einen Schäkel (20) zur schwenkbaren Befestigung auf einem Träger (5) des Rotors (2), wobei der Schäkel (20) zwei gegenüberliegende Schenkel (21, 2) hat, die durch einen gekrümmten Abschnitt (23) verbunden sind und von denen einer eine Materialunterbrechung hat, die einen seitlichen Schlitz (25) mit einer bestimmten Breite (L) begrenzt und sich in einem Bereich befindet, der von dem gekrümmten Abschnitt (23) entfernt ist, der die beiden Schenkel des Schäkels 20 verbindet, und
- einen Hammer (30), der frei auf dem gekrümmten Abschnitt (23) des Schäkels (20) montiert ist, wobei der Hammer (30) einen Aufhängungsring (34) hat, der lokal mindestens eine Materialverdünnung (35) aufweist, deren Dicke (E) an seiner schmalsten Stelle wesentlich kleiner als die Breite (L) des Schlitzes (25) ist, **dadurch gekennzeichnet, dass** der Hammer (30) eine einstückige Anordnung ohne Materialdiskontinuität bildet, dass eine vorstehende keilförmige Klinge sich senkrecht zur Achse des Rings erstreckt und deren Schneidkante (33) im Wesentlichen parallel zu der Achse verläuft, und
dass sich die Materialverdünnung (35) des Rings (34) des Hammers (30) im Wesentlichen gegenüber der Schneidkante der Klinge (33) befindet und an zwei gegenüberliegenden Seiten (34a, 34b) des Abschnitts des Rings (34) als zwei gegenüberliegende "V"-Formen (36a; 36b) ausgeführt ist.

2. Vorrichtung nach Anspruch 1, **dadurch gekennzeichnet, dass** jede "V"-förmige Materialverdünnung (36a; 36b) außerdem mit einer weiteren Materialreduzierung als Abschrägung (37a; 37b) im Bereich oder nahe der Innenseite des Rings (34) versehen ist.

3. Vorrichtung nach einem der vorstehenden Ansprüche, **dadurch gekennzeichnet, dass** die beiden Schenkel (21, 22) des Schäkels (20) einstückig mit einer Hülse (24) ausgeführt sind, die dem gekrümmten Abschnitt (23) zugewandt ist, und eine axiale zylindrische Öffnung umfassen, wobei die Hülse (24) zur Aufnahme der Befestigungsmittel (8, 9) des Schäkels (20) auf dem Träger (5) des Rotors (2) vorgesehen ist.

4. Vorrichtung nach Anspruch 3, **dadurch gekennzeichnet, dass** die Hülse (24) eine Öffnung (28) umfasst, die auf der Vorder- und Rückseite des Schäkels (20) mündet und mit den Enden (24a, 24b) der axialen zylindrischen Öffnung in Verbindung steht.

5. Vorrichtung nach einem der vorstehenden Ansprüche, **dadurch gekennzeichnet, dass** der Schlitz (25) des Schäkels durch zwei "V"-förmige Kerben (26, 27) begrenzt ist, deren jeweilige Scheitelpunkte einander gegenüber vorstehen und die Breite (L) des Schlitzes (25) definieren.

6. Vorrichtung nach einem der vorstehenden Ansprüche, **dadurch gekennzeichnet, dass** eine Haltenase (29) in der Nähe des Schlitzes (25) in den Schäkel (20) ragt.

7. Vorrichtung nach einem der vorstehenden Ansprüche, **dadurch gekennzeichnet, dass** der Hammer (30) so auf dem Schäkel (20) montiert ist, dass seine Schneidkante (33) gemäß der Vorschubrichtung (D) und Drehrichtung (T) des Rotors (2) nach vorne ausgerichtet ist, so dass der Hammer (30) die Pflanzen schneidet.

8. Vorrichtung nach einem der Ansprüche 1 bis 6, **dadurch gekennzeichnet, dass** der Hammer (30) so auf dem Schäkel (20) montiert ist, dass seine Schneidkante (33) gemäß der Vorschubrichtung (D) und Drehrichtung (T) des Rotors (2) nach hinten ausgerichtet ist, so dass der Hammer die Pflanzen zerkleinert.

9. Werkzeug für eine landwirtschaftliche Maschine, insbesondere für einen Mäher oder Freischneider, umfassend einen Rotor (2), der mit Trägern (5) versehen ist, an denen jeweils eine Vorrichtung (10) zum Montieren/Demontieren eines Hammers nach einem der vorstehenden Ansprüche befestigt ist.

10. Landwirtschaftliche Maschine, insbesondere Mäher oder Freischneider, die mit einem Werkzeug nach Anspruch 9 ausgestattet ist.

## Claims

1. Device (10) for assembly/disassembly of a grinding hammer (30) on a rotor (2) of an agricultural machine, in particular of a rotary mower and/or brush cutter, comprising:
- a shackle (20) which is intended to be fixed in a pivoting manner to a support (5) of the rotor (2), the shackle (20) comprising two opposing branches (21, 2) which are connected by means of a curved portion (23) and of which one comprises an interruption of material which delimits a lateral slot (25) which has a predetermined width (L) and which is located in a zone remote from the curved portion (23) which connects the two branches of the shackle (20), and
- a hammer (30) which is freely mounted on the curved portion (23) of the shackle (20), the hammer (30) comprising a suspension ring (34) which locally has at least one narrowing of material (35) whose thickness (E), at the finest location thereof, is substantially less than the width (L) of the slot (25),
**characterised in that** the hammer (30) forms a monobloc assembly with no discontinuity of material,
**in that** a protruding blade in the form of a wedge extends perpendicularly to the axis of the ring and the cutting edge (33) of which is substantially parallel with the axis, and
**in that** the narrowing of material (35) of the ring (34) of the hammer (30) is located substantially opposite the cutting edge of the blade (33) and is produced at two opposing sides (34a, 34b) of the cross-section of the ring (34) in the form of two opposing "V" shapes (36a; 36b).

2. Device according to claim 1, **characterised in that** each narrowing of material (36a; 36b) in the form of a "V" is further provided with an additional reduction of material of the chamfer type (37a; 37b) located in the region of or close to the inner side of the ring (34).

3. Device according to either of the preceding claims, **characterised in that** the two branches (21, 22) of the shackle (20) are produced in one piece with a sleeve (24) which is located opposite the curved portion (23) and which comprises an axial cylindrical hole, the sleeve (24) being provided to receive means (8, 9) for fixing the shackle (20) to the support (5) of the rotor (2).

4. Device according to claim 3, **characterised in that** the sleeve (24) comprises an opening (28) which opens in front and rear faces of the shackle (20) and communicates with the ends (24a, 24b) of the axial cylindrical hole.

5. Device according to any one of the preceding claims, **characterised in that** the slot (25) of the shackle is delimited by two "V"-shaped notches (26, 27) whose respective tips protrude one opposite the other and define the width (L) of the slot (25).

6. Device according to any one of the preceding claims, **characterised in that** a retention lug (29) protrudes inside the shackle (2), close to the slot (25).

7. Device according to any one of the preceding claims, **characterised in that** the hammer (30) is mounted on the shackle (20) so that the cutting edge (33) thereof is orientated towards the front in the movement direction (D) and rotation direction (T) of the rotor (2) so that the hammer (30) cuts the vegetation.

8. Device according to any one of claims 1 to 6, **characterised in that** the hammer (30) is mounted on the shackle (20) so that the cutting edge (33) thereof is orientated towards the rear in the movement direction (D) and rotation direction (T) of the rotor (2) so that the hammer grinds the vegetation.

9. Tool for an agricultural machine, in particular for a rotary mower or brush cutter, comprising a rotor (2) which is provided with supports (5) to each of which there is fixed a device (10) for assembly/disassembly of the hammer according to any one of the preceding claims.

10. Agricultural machine, in particular rotary mower or brush cutter, which is provided with a tool according to claim 9.
